# EUROPEAN PATENT APPLICATION

(11) **EP 4 660 389 A2**
(43) Date of publication of application: **10.12.2025**
(21) Application number: 25180896.0
(22) Date of filing: 04.06.2025
(51) Int. Cl.: E03F 5/04, E04D 13/04, E03C 1/26, E03B 3/03

(54) **DRAINAGE STRUCTURE**

(30) Priority: 04.06.2024 GB 202407896
(71) Applicant: Spearman, Lee, Peterborough PE7 8US (GB)
(72) Inventor: Spearman, Lee, Peterborough PE7 8US (GB)
(74) Representative: Mathys & Squire

(57) **Abstract**

There is described a drainage structure for collecting and removing liquid from an area, the drainage structure comprising: a catchment reservoir; an outlet; an outlet orifice located at an interface of the catchment reservoir and the outlet, wherein the outlet orifice enables liquid to flow between the catchment reservoir and the outlet; and an outlet orifice surface arranged adjacent the outlet orifice, the outlet orifice surface comprising at least one protrusion which protrudes into the catchment reservoir and/or the outlet.

## Description

### Technical Field

The present invention relates to a drainage structure as well as methods for manufacturing, installing, and operating the drainage structure and a kit of parts for the drainage structure.

### Background

Conventional drainage structures that comprise a catchment reservoir and an outlet for collecting and removing liquid from an area often suffer blockages. Blockages typically occur at the orifice between the catchment reservoir and the outlet where matter may become lodged and prevent or substantially reduce the flow of liquid from the catchment reservoir into the outlet. Some blockages can build up over time, where sediment or other solid matter within the liquid settles around the outlet orifice and eventually occludes the outlet. Other blockages may happen rapidly, where an object of a similar or larger dimensions to the outlet orifice enters the catchment reservoir and is transported to the outlet orifice by the flow of liquid and where it may similarly occlude the outlet. If the object is deformable (such as plant matter), the force of the flow of liquid can deform the object to more completely seal the outlet orifice and hence further reduce the flow of liquid. Different types of blockages can often have a compounding effect, where a build-up of sediment settling around the outlet orifice may reduce the remaining outlet orifice size, allowing smaller objects to cause blockages. Similarly, a partial blockage by an object can eventually cause a full blockage when sediment settles and seals the remaining openings around the object.

Typically, blockages prevent or substantially reduce the flow of liquid through the outlet orifice such that the rate at which liquid enters the catchment reservoir exceeds the rate at which liquid is able to leave the catchment reservoir via the outlet orifice. Thus, liquid may fill up and eventually overflow the sides of the catchment reservoir into the surroundings. If the drainage structure is arranged adjacent to a wall, such catchment overflow may cause liquid to spill onto or down said wall and cause damage such as erosion, damp and cosmetic degradation. If the drainage structure is arranged at ground level or underground, catchment overflow can cause surface puddles or leaks into the groundwater. Blockages can also cause damage to the drainage structure itself, where sediment build-up can provide a base for vegetation to grow within or on the drainage structure and eventually warp the structure due to the weight or root heave of the vegetation.

Conventional methods to prevent blockages typically comprise attaching a filter, or grating, to the catchment tray which allow the flow of liquid into the catchment tray but prevent matter above a certain size from passing through. However, these methods do not prevent sedimentation as most sediment will comprise particles small enough to fit through the filter.

Traditional methods of catchment overflow prevention comprise adding an additional overflow outlet to the drainage structure, where in the case of a blockage in the main outlet the reservoir may be drained by the overflow outlet. However, these methods suffer from the same susceptibility to blockages as effectively they simply provide another orifice which can be blocked in a similar manner. Additionally, outlet overflows often allow any liquid from a catchment overflow to drip down the outside of the drainage structure causing the same aforementioned damage to the structure and surroundings.

Aspects and embodiments of the present disclosure have been devised with the aim of reducing the frequency and severity of blockages within drainage structures.

### Summary of the disclosure

According to a first aspect of the disclosure, there is provided a drainage structure for collecting and removing liquid from an area, the drainage structure comprising: a catchment reservoir; an outlet; an outlet orifice located at an interface of the catchment reservoir and the outlet, wherein the outlet orifice enables liquid to flow between the catchment reservoir and the outlet; and an outlet orifice surface arranged adjacent the outlet orifice, the outlet orifice surface comprising at least one protrusion which protrudes into the catchment reservoir and/or the outlet.

Preferably, the outlet orifice surface comprises a plurality of protrusions. Advantageously, this may increase the portion of the outlet orifice surface which is covered by the protrusions.

Preferably, each of the plurality of protrusions has a different protrusion height, wherein the protrusion height is preferably defined as the distance from the outlet orifice surface to the extremity of the protrusion. Advantageously, this may reduce the chance of one or more objects tessellating with the outlet orifice surface.

Preferably, at least one protrusion comprises a fin, wherein the fin is a substantially planar protrusion formed with a relatively large profile in a first and second dimensions and a relatively small profile in a third dimension. Advantageously, this may prevent or reduce one or more objects becoming attached (or 'snagged') on the protrusions which may reduce liquid flow rate.

Preferably, the third dimension of the fin is substantially aligned with a direction normal to an edge of the outlet orifice. Advantageously, this may prevent or reduce drag on the liquid flow by the fin and thereby increase liquid flow rate.

Preferably, the outlet orifice comprises a plurality of edges, wherein the fin being substantially aligned with the direction comprises a plurality of fins each with a third dimension normal to one of the plurality of edges. Advantageously, this may allow the fins to substantially align with a convergent flow (e.g. flow towards a circular orifice outlet) and thereby increase liquid flow rate.

Preferably, the outlet orifice comprises a substantially circular shape with a circumference, wherein the fin being substantially aligned with the direction comprises a plurality of fins each with a third dimension normal to one the circumference of the outlet orifice.

Preferably, the fin comprises a variable fin height which tapers in a direction distal the outlet orifice, wherein the fin height is defined as the distance from the outlet orifice surface to the extremity of the fin.

Preferably, the fin reaches a maximum fin height adjacent the orifice outlet. Advantageously, this may cause one or more objects causing a partial blockage to be retained at a distance away from the outlet orifice.

Preferably, the outlet orifice surface further comprises at least one groove, wherein the at least one groove is a depression (or channel) inset into the outlet orifice surface for directing liquid at least under the action of gravity. Advantageously, this may allow liquid to be directed at or towards an underside of a blockage.

Preferably, the at least one groove is arranged between a first protrusion and a second protrusion of the drainage structure. Advantageously, this may increase the effective height of the protrusion.

Preferably, the at least one groove is a substantially spherical shape.

Preferably, the structure further comprises: a spout for directing liquid out of the catchment reservoir, wherein the spout is arranged at an edge of the open inlet side so as to enable liquid to flow out of the catchment reservoir via the spout; wherein the catchment reservoir comprises an open inlet side, arranged to allow a flow of liquid to enter the catchment reservoir, and wherein the spout is arranged at an edge of the open inlet side to enable liquid flow from the catchment reservoir over the spout at least under the action of gravity.

Preferably, the spout is located at a point of lowest altitude on the edge of the open inlet side, such that liquid is able to flow from the catchment reservoir over the spout before flowing over a different edge of the catchment reservoir.

Preferably, the spout comprises an unenclosed channel. Advantageously, this may prevent or reduce blockages occurring in the spout.

Preferably, the spout protrudes from the catchment reservoir. Advantageously, this may prevent or reduce liquid passing through the spout from contacting lower parts of the drainage structure.

Preferably, the catchment reservoir is arranged to be attached to a structure at a first side of the catchment reservoir and wherein the spout protrudes from a second side of the catchment reservoir, preferably wherein the first side is opposite the second side.

According to a second aspect of the disclosure, there is described a drainage structure for collecting and removing liquid from an area, the drainage structure comprising: a catchment reservoir comprising an open inlet side, wherein the open inlet side enables liquid to flow into the catchment reservoir; a spout for directing liquid out of the catchment reservoir, wherein the spout is arranged at an edge of the open inlet side so as to enable liquid to flow out of the catchment reservoir via the spout; an outlet; and an outlet orifice located at an interface of the catchment reservoir and the outlet, wherein the outlet orifice enables liquid to flow between the catchment reservoir and the outlet.

Preferably, the drainage structure further comprises: an outlet orifice surface, arranged adjacent the outlet orifice, wherein the outlet orifice surface comprises at least one protrusion which protrudes into the catchment reservoir and/or the outlet.

Preferably, the catchment reservoir comprises a plurality of inner surfaces, wherein all of the plurality of inner surfaces are oblique to a vertical direction, wherein the vertical direction is defined as a line of increasing altitude.

Preferably, the catchment reservoir comprises an open inlet side, arranged to allow a flow of liquid to enter the catchment reservoir, the structure further comprising: an inlet side grating, arranged across the open inlet side, wherein the inlet side grating is arranged to block one or more objects from entering the catchment reservoir, preferably wherein the inlet side grating is arranged to block one or more objects above a minimum dimension from entering the catchment reservoir.

According to a third aspect of the disclosure, there is described a method of manufacturing a drainage structure, the drainage structure comprising: a catchment reservoir; an outlet; an outlet orifice arranged to enable liquid to flow between the catchment reservoir and the outlet; and an outlet orifice surface arranged adjacent the outlet orifice; the method comprising arranging the protrusion on the outlet orifice surface so that the protrusion protrudes into the catchment reservoir and/or the outlet.

According to a fourth aspect of the disclosure, there is described a kit of parts for a drainage structure, the kit of parts comprising; a catchment reservoir with an open inlet side; an outlet, and one or more of: one or more protrusions arranged to be attachable to the outlet and/or the catchment reservoir; one or more gratings and/or one or more spouts, wherein the one or more gratings and one or more spouts are removably attachable to the open inlet side.

According to a fifth aspect of the disclosure, there is described a method of installing a drainage structure, the method comprising attaching the drainage structure to a building, preferably attaching the drainage structure to the building so that an open inlet side of the drainage structure is facing upwards.

According to a sixth aspect of the disclosure, there is described a method of operating a drainage structure, the method comprising collecting material at the location of the protrusion, the method preferably further comprising removing the collected material from the drainage structure.

According to a seventh aspect of the disclosure, there is provided a drainage structure for collecting and removing liquid from an area, the drainage structure comprising: a catchment reservoir; an outlet; an outlet orifice located at an interface of the catchment reservoir and the outlet, wherein the outlet orifice enables liquid to flow between the catchment reservoir and the outlet; and an outlet orifice surface arranged adjacent the outlet orifice, the outlet orifice surface comprising: at least one protrusion which protrudes into the catchment reservoir and/or the outlet, wherein the at least one protrusion comprises a fin, wherein the fin is a substantially planar protrusion formed with a relatively large profile in a first and second dimensions and a relatively small profile in a third dimension, and at least one groove, wherein the at least one groove is a depression inset into the outlet orifice surface for directing liquid at least under the action of gravity.

Any system feature as described herein may also be provided as a method feature, and vice versa. As used herein, means plus function features may be expressed alternatively in terms of their corresponding structure. Any, some and/or all features in one aspect of the disclosure may be applied to other aspects of the disclosure, in any appropriate combination or sub-combination. In particular, structure aspects may be applied to method aspects, and vice versa.

It should also be appreciated that particular combinations of the various features described and defined in any aspect of the disclosure can be implemented and/or supplied and/or used independently. The disclosure extends to methods, system and structures substantially as herein described and/or as illustrated with reference to the accompanying figures. The disclosure also extends to any novel aspects or features described and/or illustrated herein. In this specification the word 'or' can be interpreted in the exclusive or inclusive sense unless stated otherwise.

The disclosure will now be described, by way of example, with reference to the accompanying drawings.

### Brief Description of Drawings

In order that the disclosure can be well understood, aspects and embodiments will now be discussed by way of example only with reference to the accompanying drawings, in which:
Figure 1 is a schematic diagram of a drainage structure as described herein;
Figures 2a and 2b show schematic diagrams of a cross-sectional view and 'inlet side' view of an example drainage structure;
Figure 3 is a schematic diagram of a drainage structure comprising a spout according to another embodiment of the present disclosure;
Figures 4a and 4b show schematic diagrams of a 'top' view and a 'side' view of a drainage structure according to an embodiment of the present disclosure;
Figure 5 is a schematic diagram of a drainage structure comprising a grating according to an embodiment of the present disclosure.

It should be noted that the figures are diagrammatic and may not be drawn to scale. Relative dimensions and proportions of parts of these figures may have been shown exaggerated or reduced in size, for the sake of clarity and convenience in the drawings.

The same reference signs are generally used to refer to corresponding or similar features in modified and/or different embodiments.

### Detailed Description

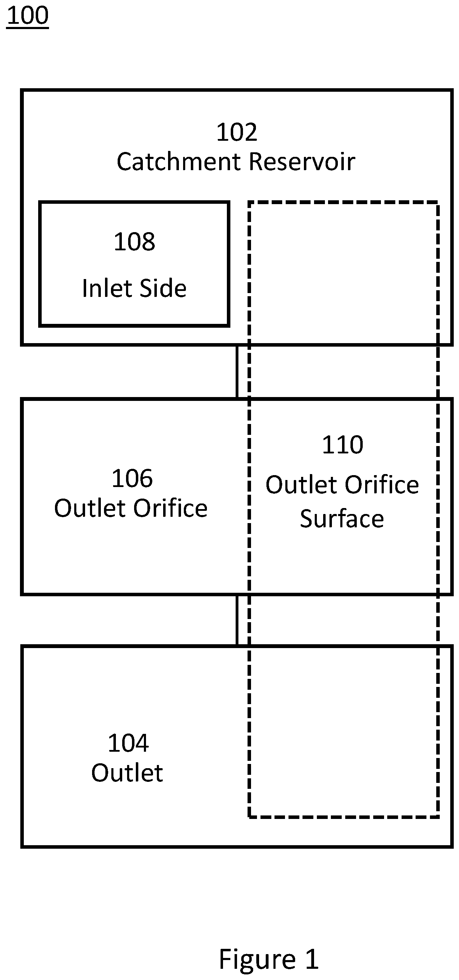

Figure 1 shows a schematic diagram of a drainage structure 100 for collecting and removing liquid from an area according to an embodiment of the present disclosure. The structure 100 comprises a catchment reservoir 102 in fluid connection to an outlet 104. The fluid connection from the catchment reservoir 102 to the outlet 104 is directed through an outlet orifice 106.

The catchment reservoir 102 comprises a container or a tank suitable for (at least temporarily) storing liquid to be removed from an area via the outlet 104. The catchment reservoir 102 may comprise a plurality of inners surfaces, for retaining liquid within the tank. Typically, the plurality of inner surfaces are formed of a material that is impermeable to liquid (e.g. plastic or metal). It will be understood that in some embodiments the plurality of inner surfaces may only be substantially impermeable to liquid and that a relatively small proportion of liquid may be lost through the plurality of inner surfaces to the surroundings. In some embodiments the catchment reservoir 102 may be naturally occurring and/or may form a basin defined by an indeterminate watershed boundary.

The catchment reservoir 102 comprises an inlet side 108 (or an 'inlet') through where liquid is able enter the catchment reservoir. Typically, the inlet side 108 is an open surface of the catchment reservoir 102 such that liquid may freely flow into the catchment reservoir 102 from the surroundings under the action of gravity. Additionally, or alternatively, the inlet side 108 may be in fluid connection with a duct or plurality of ducts for directing liquid into the catchment reservoir 102, wherein said ducts may, optionally, be affixed to the catchment reservoir 102. For example, the duct or plurality of ducts may be a part of a guttering system on a house.

The outlet 104 may be any means of transporting or directing liquid away from the catchment reservoir 102, such as but not limited to: a pipe, channel, duct, gulley, tube or hose including a plurality of or combination of any said means. Typically, the outlet 104 comprises a plurality of inner surfaces which may transport or direct liquid. Typically, the outlet is arranged to transport the liquid to a location where it can be safely discharged from the structure 100 without causing damage to the surroundings or to the structure 100 itself (e.g. a down pipe from the guttering of a house onto a lawn below). Optionally, the outlet may be in fluid connection with further drainage infrastructure such as, but not limited to, a sewer or guttering.

The outlet orifice 106 refers, generally, to the internal boundary of the drainage structure 100 at the interface where the catchment reservoir 102 and outlet 104 are in fluid communication. During normal use of the drainage structure 100, the catchment reservoir 102 is connected to the outlet 104 with the outlet orifice 106 being located at the interface of the catchment reservoir 102 and the outlet 104 such that liquid is able to flow from the catchment reservoir 102 to the outlet 104 via the outlet orifice 106. The structure 100 comprises an outlet orifice surface 110 that comprises at least one inner surface of the catchment reservoir 102 and/or the outlet 104 which surface is immediately adjacent to the outlet orifice 106 (e.g. the outlet orifice surface 110 may comprise a surface of the catchment reservoir 102 that extends from the outlet orifice 106). Thus, the outlet orifice surface 110 defines the internal surfaces of the drainage structure 100 which are typically relevant to any blockages of the outlet orifice 106. Typically, the outlet 104 is of substantially circular cross-section (e.g. a pipe) and therefore the outlet orifice 106 typically comprises a circular plane centred on the outlet 104. However, it will be understood that the outlet may be of various cross-sectional shapes such as, but not limited to: a square, a rectangular, an ovate, a triangular or an irregular shape, and hence the shape of the outlet orifice may depend on the cross-sectional shape of the outlet 104.

Typically, the outlet orifice 106 is arranged at or near the lowest altitude point of the catchment reservoir 102 such that liquid may naturally flow to the outlet orifice 106 at least under the action of gravity and thereby empty substantially all of the liquid from the catchment reservoir 102 into the outlet 104. However, it will be understood that the outlet orifice 106 may be arranged at any point on any inner surface of the catchment reservoir 102. In some embodiments the catchment reservoir 102 may further comprise a pump for pumping liquid towards the outlet orifice 106.

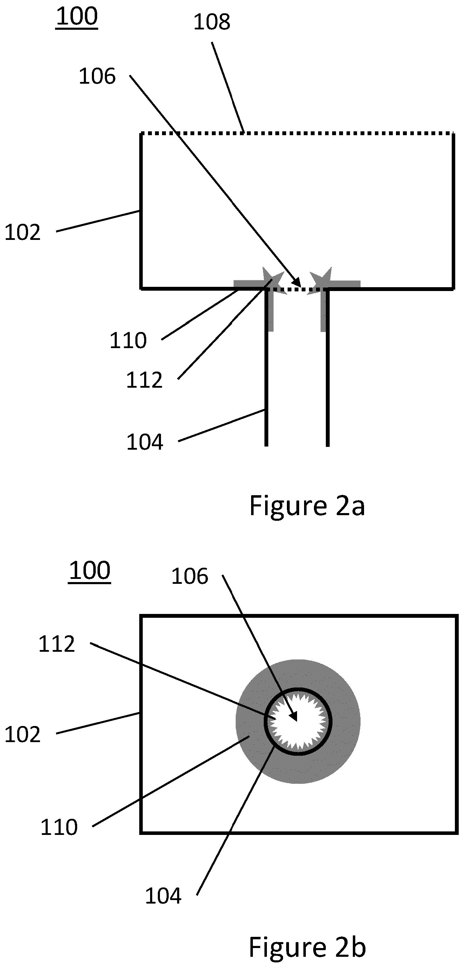

Figures 2a and 2b show schematic diagrams of a cross-sectional view and 'inlet side' view, respectively, of a specific embodiment of the drainage structure 100. The structure 100 comprises the catchment reservoir 102, which is in fluid connection to the outlet 104, wherein the outlet 104 has a circular cross-sectional shape. Liquid may enter the catchment reservoir 102 through the inlet side 108. The fluid connection from the catchment reservoir 102 to the outlet 104 is directed through an outlet orifice 106 which is associated with an outlet orifice surface 110, as described above in reference to Figure 1, wherein the dashed lines to indicate the outlet orifice 106 and inlet side 108 in Figure 2a have been omitted in Figure 2b for clarity. Figure 2a and 2b show the outlet orifice surface 110 formed of a plurality of protrusions 112 which protrude into the outlet orifice 106. It will be appreciated that various forms of the outlet orifice surface are possible (e.g. with any number, including zero or one, protrusions).

As described above, blockages may be caused by one or more objects of larger dimensions than the outlet orifice 106 being unable to exit the catchment reservoir 102 through the outlet orifice 106. Said one or more objects are transported to the outlet orifice 106 by the flow of liquid but are not able to exit into the outlet 104 and instead at least partially occlude the outlet 104 and hence reduce the flow of liquid out of the catchment reservoir 102. The outlet 104 may eventually become completely occluded if said one or more objects at the outlet orifice 106 can form a seal with the outlet orifice surface. Complete occlusions of the outlet 104 may be significantly more damaging than partial occlusions, as they may cause liquid to remain in the catchment reservoir 102 indefinitely. Stationary liquid in the catchment reservoir 102 may allow more sediment to fall out of suspension and thus may increase the degree of sediment build-up, further sealing a pre-existing blockage. This makes it less likely that a pre-existing blockage will be naturally removed by random action of the flow of liquid. Furthermore, stationary liquid increases the chance that vegetation can grow within the drainage structure 100 and cause the aforementioned damage to the drainage structure 100 due to warping. Therefore, it will be appreciated that it is advantageous to prevent a partial occlusion of the outlet 104, by one or more objects, eventually becoming a complete occlusion due to the one or more objects forming a seal with the outlet orifice surface 110.

It will be understood that the nature of blockages is inherently probabilistic and the chance of one or more objects forming a seal is dependent on a number of chaotic (or otherwise unpredictable) factors including; the speed and angle with which an object contacts the outlet orifice surface 110, the structural strength of the one or more objects, the number/density of objects within the flow of liquid and the composition of objects within the flow of liquid (e.g. vegetation, sand/silt, masonry/rock). However, the likelihood of one or more objects forming a seal with the outlet orifice surface 110 is, at least partially, dependent on the design of the outlet orifice surface 110 and so by altering this design it is possible to reduce the likelihood of a blockage.

In general, a seal between any two surfaces is more likely to be formed when said two surfaces are shaped such that they may interlock or 'tessellate', and thereby reduce the number of gaps between the two surfaces for liquid to flow through. Typically, this is most likely to occur when the two surfaces are of the same shape. For example, a flat surface may more easily form a seal with another flat surface (than with, say, a curved surface). Likewise, in another example, a curved shape of a particular arc may more easily form a seal with another curve of the same arc. Therefore, to reduce the chance of one or more objects forming a seal with the outlet orifice surface 110 it is advantageous to design the outlet orifice surface 110 to reduce tessellation with objects which may commonly be found within the flow of liquid into the drainage structure 100.

It will be appreciated that the flow of liquid into a drainage structure may comprise a multitude of objects comprising a plurality of differently shaped surfaces. However, flat or substantially planar surfaces are typically more common than any other specific surface shape. For example, flat surfaces may commonly be found in vegetation as leaves, bark and chips of wood are often substantially planar. Furthermore, typically drainage structures are utilised in urban or human dominated areas where bricks and cut masonry are more common. Thus, while any specific rock may not be substantially planar, it may be expected that rocks or fragments derived from planar blocks or sheets of masonry which may enter the drainage structure may be more likely to comprise a plurality of substantially planar surfaces.

As described above, the drainage structure of the present disclosure typically comprises one or more protrusions that are associated with, e.g. that protrude from, the outlet orifice surface 110. In the embodiment of Figures 2a and 2b, the drainage structure comprises a plurality of protrusions 112 that are arranged symmetrically about the outlet orifice surface 110 (e.g. to either side of this surface). The plurality of protrusions 112 of Figure 2a and 2b reduce the ability for an object comprising substantially planar surfaces to tessellate with the outlet orifice surface 110 and thereby reduce the likelihood that one or more objects, which are transported by the flow of liquid into the outlet orifice 106, form a seal. As discussed above, while the flow of liquid into the outlet 104 may still be reduced if an object covers a portion of the outlet orifice surface, the absence of a seal (which is achieved by the plurality of protrusions 112) may prevent liquid remaining in the catchment reservoir 102 indefinitely and hence may reduce or prevent the aforementioned sediment build-up or damage to the drainage structure 100.

While Figure 2a and 2b show the plurality of protrusions 112 displaced across portions of the outlet orifice surface 110 within the catchment reservoir 102 and portions within the outlet 104, it will be appreciated that the exact location and distribution of the plurality of protrusions 112 may be dependent on the specific implementation. For example, in some embodiments, the plurality of protrusions 112 may be located exclusively within the catchment reservoir 102 or the outlet 104. The location of a protrusion may cause it to be more or less able to prevent a blockage caused by a specific object. For example, in some embodiments the plurality of protrusions 112 may be wholly distributed on portions of the outlet orifice surface 110 within the catchment reservoir 102 (e.g. the protrusions may extend into the (e.g. central area of the) catchment reservoir 102. In such embodiments, the plurality of protrusions 112 may reduce tessellation between the outlet orifice surface 110 and planar surfaces that are parallel to the plane of the outlet orifice 106 and thereby be more likely to prevent blockages caused by leaves (which are substantially planar) and/or prevent leaves from forming a seal . In some embodiments, the plurality of protrusions 112 may be wholly distributed on portions of the outlet orifice surface 110 within the outlet 104. In such embodiments, the plurality of protrusions 112 may be specifically advantageously placed to break apart objects in the flow of liquid. It will be understood that the flow of liquid may be fastest through a centre of the outlet orifice 106 and hence protrusions arranged within the outlet 104, may be able to extend into or near the centre of the outlet orifice 106 and hence cause a relatively higher contact speed with the objects in the flow of liquid. Thus, the location and distribution of the plurality of protrusions 112 may depend on the expected composition of objects in the flow of liquid into the drainage structure 100.

Figure 2a and 2b show the plurality of protrusions 112 as comprising a plurality of irregular sharp 'spikes' formed of substantially straight edges. However, it will be appreciated that the particular shape and configuration of the plurality of protrusions 112 may vary depending on the specific implementation, as will be described below. Furthermore, one or more different protrusion shapes and configurations may be combined such that advantages associated with a first specific implementation may be combined with advantages associated with a second specific implementation.

In some embodiments, the plurality of protrusions 112 comprise substantially rounded or smoothed edges (as opposed to sharp spikes). This may advantageously reduce the chance that an object being transported by the flow of liquid becomes attached or 'snagged' on the protrusion (which may cause a blockage). However, it will be understood that in some embodiments a protrusion comprising one or more sharp edges, such as a 'sharp spike', advantageously enables the plurality of protrusions 112, in combination with the flow of liquid though the outlet orifice 106, to break apart objects in said flow of liquid via collisions with the one or more sharp edges. The ability to break apart objects in the flow of liquid may depend on the structural integrity of the objects in the flow of liquid and hence it will be understood that the benefit of rounded or sharp edges may vary depending on the expected composition of objects in the flow of liquid into the drainage structure 100.

In some embodiments, the plurality of protrusions 112 may comprise one or more 'fins', wherein a fin is defined as a substantially planar protrusion, formed with a relatively large profile in a first and second dimensions but a relatively small profile in a third dimension. Typically, the fins are arranged such that the third dimension is aligned with a direction normal to an edge of the outlet orifice 106. In some embodiments the outlet orifice may be a polygon shape comprising a plurality of edges, in such embodiments each of a plurality of fins may be arranged normal to one of the plurality of edges. In some embodiments, the fins are arranged such that said third dimension is aligned with the flow of liquid through the outlet orifice 106. Being 'aligned with the flow of liquid' may refer to the direction of the flow at the location of the fin; a plurality of fins may be arranged in a plurality of directions such that each is individually aligned with the direction of the flow of liquid at its respective location. For example, typically the outlet orifice 106 is a circular shape and thus the flow of liquid over a portion of the outlet orifice surface 112 (and through the outlet orifice 106) may be converging to a point at a centre of the circular shape. In such embodiments, the fins may be arranged in an arc or annulus surrounding the outlet orifice 106, wherein each fin is aligned perpendicular (or normal) to a circumference of said circular shape. Advantageously, this may reduce the drag force exerted by the protrusions on the flow of liquid and hence minimise the reduction in rate of flow of liquid through the outlet orifice 106 caused by the plurality of protrusions 112. Furthermore, the relatively small profile in the direction of flow of liquid reduces the chance that an object being transported by the flow of liquid becomes attached or 'snagged' on the protrusion (which may cause a blockage).

In some embodiments, a 'fin' may taper in a direction away from the outlet orifice 106 such that a fin may increase in prominence towards the outlet orifice 106 and reach a maximum prominence at the outlet orifice 106. This may advantageously further reduce the chance that that an object being transported by the flow of liquid becomes attached or 'snagged' on the protrusion.

In some embodiments, the outlet orifice surface 110 may further comprise one or more grooves, wherein a groove is defined as a depression or channel inset into the outlet orifice surface 110 suitable for directing liquid at least under the action of gravity. Typically grooves may be arranged to direct liquid to or towards the outlet orifice 106 and of dimensions smaller than the dimensions of the outlet orifice 106. Thus, advantageously one or more grooves may reduce the likelihood that one or more objects within the flow of liquid are able to form a seal with the outlet orifice surface 110 and thereby enable a flow of liquid to be transported beneath any objects causing a partial blockage. Furthermore, a flow of liquid beneath any objects causing a partial blockage increases the chance that said flow of liquid will push, by turbulent pressure of the liquid, said object away from the outlet orifice 106 and thereby remedy the partial blockage.

In embodiments wherein the outlet orifice surface 110 comprises a plurality of protrusions 112, the one or more grooves may be arranged between one or more members of the plurality of protrusions 112. In such embodiments the grooves may have a synergistic effect with the plurality of protrusions 112 such that the depth of the groove increases the effective prominence of the protrusion by increasing the gap between the maximum and minimum deviation of the outlet orifice surface 110.

As described above, typically the outlet orifice surface 110 comprises a plurality of protrusions, however in some embodiments a singular protrusion and or a singular groove may be advantageous, in particular wherein the drainage structure is implemented in a confined area or comprising a catchment reservoir formed with a restricted shape or size (such as in a submerged pipe network), wherein an outlet orifice surface comprising a plurality of protrusions may disadvantageously reduce the rate of flow of liquid through the outlet orifice.

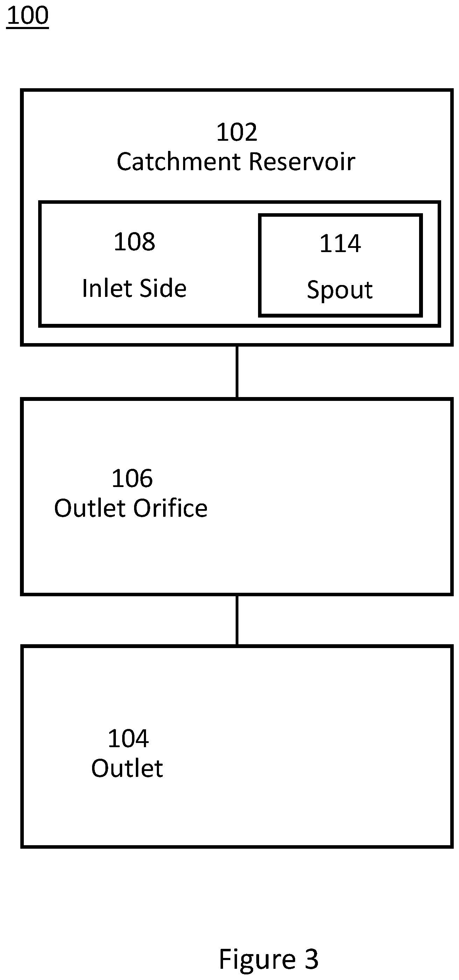

Figure 3 shows a schematic diagram of a drainage structure 100 for collecting and removing liquid from an area according to another embodiment of the present disclosure. The structure 100 comprises a catchment reservoir 102 in fluid connection to an outlet 104. The fluid connection from the catchment reservoir 102 to the outlet 104 is directed through an outlet orifice 106, as described above in reference to Figure 1. However, in this embodiment the catchment reservoir 102 comprises a spout 114 arranged along an edge of the inlet side 108.

The spout 114, is defined as a lip or protrusion from the catchment reservoir 102 suitable for directing liquid. Specifically, the spout 114 is able to direct liquid away from the drainage structure 100 such that liquid may fall (or pour) from the catchment reservoir under the action of gravity without contacting lower parts of structure 100. Advantageously, the spout 114 may prevent liquid running down any outside surfaces of the catchment reservoir 102 and thereby reduce damage to the structure 100 caused by the aforementioned liquid erosion or wear. Optionally, or alternatively, the spout 114 may be arranged to direct overflowing liquid into a subsidiary drainage infrastructure (e.g. a sump tank).

Typically, the spout 114 is arranged at the point of lowest altitude along the edge of the inlet side 108, such that liquid filling the catchment reservoir 102 reaches the portion of the inlet side 108 comprising the spout 114 before any other portion thereby causing liquid to overflow at the spout 114 before overflowing at any other portion of the inlet side 108. However, in some embodiments the edge of the inlet side 108 may be of consistent height. In such embodiments a plurality of spouts may be arranged along a plurality of edges of the inlet side 108 such that liquid may overflow in a plurality of directions while still overflowing through a spout. Advantageously, use of a plurality of spouts may allow the drainage structure 100 to be used at an oblique or changing angle while still allowing liquid to overflow through a spout.

Typically, the spout 114 is arranged such that the space above the spout (in regard to altitude) is substantially open. Advantageously, this may effectively make the spout 114 immune or less prone to blockages. If the liquid overflowing the catchment reservoir 102 comprises one or more objects, there is effectively no maximum size for an object to be transported over the spout - as opposed to an overflow structure comprising an enclosed outlet (e.g. a pipe) in which large objects or sediment may impede or reduce the flow of liquid, as described above.

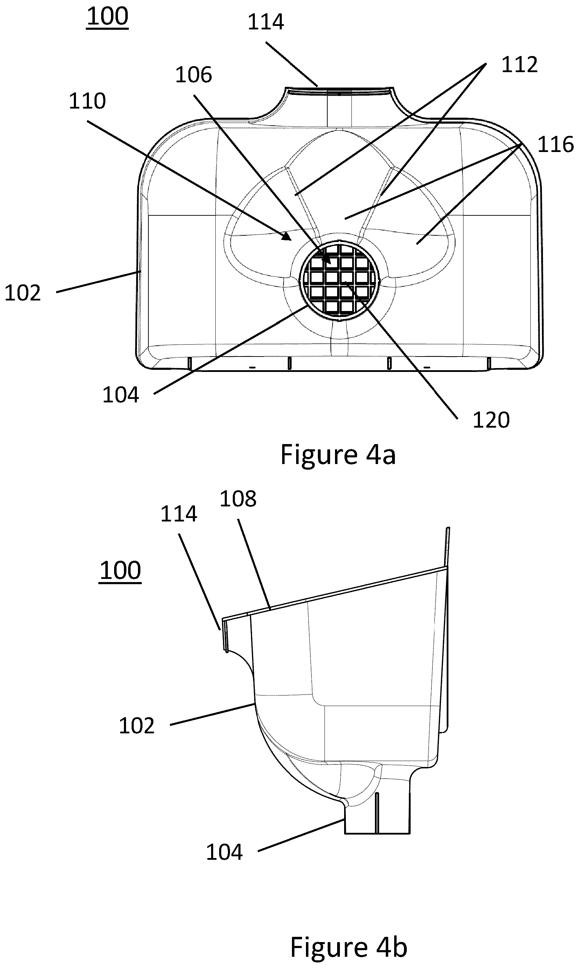

Figures 4a and 4b show schematic diagrams of a 'top' view and a 'side' view of a drainage structure 100 according to an embodiment of the present disclosure. The structure 100 comprises a catchment reservoir 102 in fluid connection to an outlet 104. The fluid connection from the catchment reservoir 102 to the outlet 104 is directed through an outlet orifice 106, which is associated with an outlet orifice surface 110, as described above in reference to Figure 1. The catchment reservoir 102 further comprises a spout 114 arranged along an edge of the inlet side 108, as described above in reference to Figure 3. Figure 4a shows the outlet orifice surface 110 comprising a plurality of protrusions 112 and one or more grooves 116.

Figure 4a shows the outlet orifice 106 further comprising an outlet grating 120 where the outlet grating 120 is an optional feature of drainage structure 100. In some embodiments the outlet grating 120 may be removably attachable to the outlet orifice 106 such that the drainage structure 100 may be used in different configurations excluding the outlet grating 120.

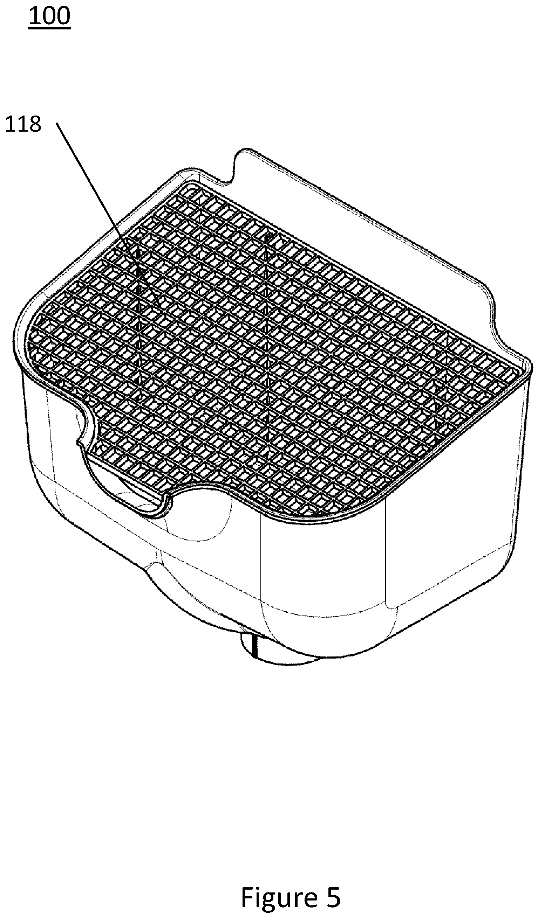

Figure 5 shows a schematic diagram of the drainage structure according to another embodiment of the present invention. The drainage structure 100 is similar to the drainage structure 100 as described in reference to Figure 4a and 4b but further comprises an inlet side grating 118, where the inlet side grating is arranged to filter out one or more objects above a minimum size from a flow of liquid entering the catchment reservoir 102 through the inlet side 108 and thereby block said objects from entering the catchment reservoir 102. It will be understood that the minimum size of objects which are filtered out of the flow of liquid by the inlet side grating 118 is dependent on the dimensions of the grating.

In some embodiments the inlet side grating 118 is removably attachable to the catchment reservoir 102 such that the device may be used in operation both with or without the inlet side grating 118. In some embodiments a plurality of gratings, each defined by a different minimum size, are provided such that a member of the plurality of gratings defined by an optimal minimum size may be used in operation, wherein the optimal minimum size may be dependent on the expected composition of objects in the flow of liquid into the drainage structure 100.

In some embodiments, the inlet side grating 118 is arranged to block large objects from entering the catchment reservoir 102, where large objects may be defined as objects with dimensions greater than a certain percentage of the dimensions of the outlet orifice 106.

Typically, a grating may prevent the passage of objects with dimensions greater than 50% of the outlet orifice 106. For example, the grating may have apertures that are between 10mm and 100mm. It will be understood that large objects are more likely to be of a greater mass and hence may break or damage the plurality of protrusions. Thus, advantageously, the inlet side grating 118 may have a synergistic effect in combination with the plurality of protrusions 112, wherein the inlet side grating prevents or reduces damage to the plurality of protrusions 112 and thereby increases the lifespan of the plurality of protrusions 112.

It will be understood that the present invention has been described above purely by way of example, and modifications of detail can be made within the scope of the invention.

Reference numerals appearing in the claims are by way of illustration only and shall have no limiting effect on the scope of the claims.

## Claims

1. A drainage structure (100) for collecting and removing liquid from an area, the drainage structure (100) comprising:
a catchment reservoir (102);
an outlet (104);
an outlet orifice (106) located at an interface of the catchment reservoir (102) and the outlet (104), wherein the outlet orifice (106) enables liquid to flow between the catchment reservoir (102) and the outlet (106); and
an outlet orifice surface (110) arranged adjacent the outlet orifice (106), the outlet orifice surface (110) comprising at least one protrusion (112) which protrudes into the catchment reservoir (102) and/or the outlet (104).

2. The structure of any preceding claim, wherein the outlet orifice surface (110) further comprises at least one groove (116), wherein the at least one groove (116) is a depression inset into the outlet orifice surface (110) for directing liquid at least under the action of gravity.

3. The structure of claim 2, wherein the at least one groove (116) is arranged between a first protrusion and a second protrusion of the drainage structure (100).

4. The structure of any preceding claim, wherein the outlet orifice surface (110) comprises a plurality of protrusions,
preferably wherein each of the plurality of protrusions has a different protrusion height, wherein the protrusion height is defined as the distance from the outlet orifice surface (110) to the extremity of the protrusion.

5. The structure of any preceding claim, wherein at least one protrusion (112) comprises a fin, wherein the fin is a substantially planar protrusion formed with a relatively large profile in a first and second dimensions and a relatively small profile in a third dimension.

6. The structure of claim 5, wherein the third dimension of the fin is substantially aligned with a direction normal to an edge of the outlet orifice (106).

7. The structure of claim 6, wherein the outlet orifice (106) comprises a plurality of edges, wherein the fin, being substantially aligned with the direction, comprises a plurality of fins each with a third dimension normal to one of the plurality of edges, preferably wherein the plurality of edges form a substantially circular shape with a circumference, wherein the fin, being substantially aligned with the direction, comprises a plurality of fins each with a third dimension normal to the circumference of the outlet orifice (106).

8. The structure of any of claims 5 to 7, wherein the fin comprises a variable fin height which tapers in a direction distal the outlet orifice (106), wherein the fin height is defined as the distance from the outlet orifice surface (110) to the extremity of the fin, preferably wherein the fin reaches a maximum fin height adjacent the orifice outlet (106).

9. The structure of any preceding claim, wherein the catchment reservoir (102) comprises an open inlet side (108), arranged to allow a flow of liquid to enter the catchment reservoir (102), further comprising:
a spout (114) for directing liquid out of the catchment reservoir (102), wherein the spout (114) is arranged at an edge of the open inlet side (108) so as to enable liquid to flow out of the catchment reservoir (102) via the spout (114) at least under the action of gravity,
preferably wherein the spout (114) is located at a point of lowest altitude on the edge of the open inlet side (108), such that liquid is able to flow from the catchment reservoir (102) over the spout (114) before flowing over a different edge of the catchment reservoir (102),
more preferably wherein the spout (114) comprises an unenclosed channel.

10. The structure of any of claim 9, wherein the spout (114) protrudes from the catchment reservoir (102),
preferably wherein the catchment reservoir (102) is arranged to be attached to a structure at a first side of the catchment reservoir (102) and wherein the spout (114) protrudes from a second side of the catchment reservoir (102),
more preferably wherein the first side is opposite the second side.

11. A drainage structure (100) for collecting and removing liquid from an area, the drainage structure (100) comprising:
a catchment reservoir (102) comprising an open inlet side (108), wherein the open inlet side (108) enables liquid to flow into the catchment reservoir (102);
a spout (114) for directing liquid out of the catchment reservoir (102), wherein the spout (114) is arranged at an edge of the open inlet side (108) so as to enable liquid to flow out of the catchment reservoir (102) via the spout (114);
an outlet (104); and
an outlet orifice (106) located at an interface of the catchment reservoir (102) and the outlet (104), wherein the outlet orifice (106) enables liquid to flow between the catchment reservoir (102) and the outlet (104), the drainage structure (100) preferably further comprising:
an outlet orifice surface (110), arranged adjacent the outlet orifice (106),
wherein the outlet orifice surface (110) comprises at least one protrusion (112) which protrudes into the catchment reservoir (102) and/or the outlet (104).

12. The structure of any preceding claim, wherein the catchment reservoir (102) comprises a plurality of inner surfaces, wherein all of the plurality of inner surfaces are oblique to a vertical direction, wherein the vertical direction is defined as a line of increasing altitude.

13. The structure of any preceding claim, wherein the catchment reservoir (102) comprises an open inlet side (108), arranged to allow a flow of liquid to enter the catchment reservoir (102), the structure further comprising:
an inlet side grating (118), arranged across the open inlet side (108),
wherein the inlet side grating (118) is arranged to block one or more objects from entering the catchment reservoir (102),
preferably wherein the inlet side grating (118) is arranged to block one or more objects above a minimum dimension from entering the catchment reservoir (102).

14. A method of manufacturing a drainage structure (100), the drainage structure (100) comprising:
a catchment reservoir (102);
an outlet (104);
an outlet orifice (106) located at an interface of the catchment reservoir (102) and the outlet (104),
wherein the outlet orifice (106) enables liquid to flow between the catchment reservoir (102) and the outlet (104); and
an outlet orifice surface (110) arranged adjacent the outlet orifice (106);
the method comprising arranging at least one protrusion (114) on the outlet orifice surface (110), wherein the at least one protrusion (114) protrudes into the catchment reservoir (102) and/or the outlet (104).

15. A kit of parts for a drainage structure (100), the kit of parts comprising;
a first part comprising:
a catchment reservoir (102) with an open inlet side (108);
an outlet (104); and
an outlet orifice (106) located at an interface of the catchment reservoir (102) and the outlet (104), wherein the outlet orifice (104) enables liquid to flow between the catchment reservoir (102) and the outlet (104); and
a second part comprising one or more of:
at least one protrusion (114), wherein the at least one protrusion (114) is removably attachable to the outlet (104) and/or the catchment reservoir (102);
at least one grating (118,120) and/or at least one spout (114), wherein the at least one grating (118,120) and the at least one spout (114) are removably attachable to the open inlet side (108).
